# EUROPÄISCHE PATENTSCHRIFT

(11) **EP 0 876 855 B1**
(45) Veröffentlichungstag und Bekanntmachung des Hinweises auf die Patenterteilung: **06.08.2003**
(21) Anmeldenummer: 98107245.7
(22) Anmeldetag: 21.04.1998
(51) Int. Cl.: B08B 5/00, B08B 7/02, B65B 55/24

(54) **Verfahren und Einrichtung zum Reinigen von Verpackungsmaschinen**
Method and installation for cleaning packaging machines
Procédé et installation pour nettoyer des machines d'emballage

(30) Priorität: 09.05.1997 DE 19719198
(43) Veröffentlichungstag der Anmeldung: 11.11.1998
(73) Patentinhaber: Focke & Co. (GmbH & Co.), 27283 Verden (DE)
(72) Erfinder: Focke, Heinz, 27283 Verden (DE)
(74) Vertreter: Bolte, Erich, Dipl.-Ing.

(56) Entgegenhaltungen:
- EP-A- 0 012 601
- EP-A- 0 535 501
- EP-A- 0 647 562
- DE-A- 2 552 725
- DE-A- 3 812 689
- DE-A- 19 618 400
- GB-A- 2 168 954
- US-A- 4 259 372
- US-A- 4 469 043
- US-A- 4 964 361
- US-A- 5 051 758
- US-A- 5 081 472
- US-A- 5 479 947
- US-A- 5 683 753

## Beschreibung

Die Erfindung betrifft eine Verpackungsmaschine für die Herstellung von Zigarettenpackungen mit einer Zigarettengruppe als Packungsinhalt, wobei die Zigarettengruppen im Bereich eines Zigarettenmagazins durch Ausschieben von Zigaretten aus Schächten von Schachtgruppen des Zigarettenmagazins gebildet werden und einer Taschenkette als Förderer für die Zigarettengruppen zuführbar sind.

Eine solche Verpackungsmaschine ist z. B. aus der US-A-4 750 607 bekannt.

Für die Reinigung von Maschinen verschiedener Art sind bereits Vorschläge bekannt, bei denen Staub mit Hilfe von Druckluft (Blasen) und/oder Saugluft beseitigt wird. Bei einer Textilmaschine ist unterhalb von Arbeitsaggregaten eine Platte angebracht, die Staubpartikel auffangen soll. Ein horizontal gerichtetes Blasrohr und ein gegenüberliegendes Saugrohr beseitigen die auf dem Blech aufgefangenen Staubpartikel (EP 0 012 601).

Bei einer Webmaschine ist es bekannt, staubhaltige Luft durch Absaugen zu reinigen. Im Bereich der Staubentstehung ist eine Mehrzahl von Ansaugöffnungen installiert, die die staubhaltige Luft einer Filtereinrichtung zuführen. Die von Staub befreite Luft wird über eine Blaseinrichtung wieder in den Umlauf geleitet (EP 0 535 501).

Bei der Erfindung geht es um die Ausgestaltung einer Verpackungsmaschine für Zigaretten. Die Erfindung geht aus von der Erkenntnis, dass im Bereich eines Zigarettenmagazins als notwendiges Aggregat einer Verpackungsmaschine vor allem Tabakpartikel anfallen.

Der Erfindung liegt demgemäss die Aufgabe zugrunde, Maßnahmen für die Beseitigung der im Bereich eines Zigarettenmagazins anfallenden Materialpartikel vorzuschlagen.

Zur Lösung dieser Aufgabe dient erfindungsgemäß eine gattungsgemäße Verpackungsmaschine, die durch folgende Merkmale gekennzeichnet ist :
a) unterhalb des Zigarettenmagazins ist eine horizontale Fläche als Oberfläche eines Teils eines Maschinengehäuses gebildet zum Auffangen von Tabak und Staub durch Absinken von dem Zigarettenmagazin,
b) auf der Fläche sind mindestens eine Blasdüse, vorzugsweise mehrere Blasdüsen im Abstand voneinander, angeordnet zur Erzeugung von horizontaler Luftströmung auf der Fläche,
c) die Luftströmung der Blasdüse, bzw. der Blasdüsen, ist auf einen Auffangbehälter gerichtet,
d) der Auffangbehälter ist unmittelbar neben dem Gehäuse bzw. neben der Fläche positioniert, derart, dass die abgeblasenen Partikel auf den Auffangbehälter gelangen,
e) an den Auffangbehälter ist ein Saugrohr angeschlossen zum Absaugen der Partikel aus dem Auffangbehälter.

Durch diese Art der Beseitigung von Partikeln ist es möglich, die an einem Zigarettenmagazin überwiegend anfallenden Tabakpartikel zurückzugewinnen und in den Produktionskreis der Zigarettenfertigung wieder einzuführen.

Weiterentwicklungen der Erfindung sind Gegenstand der Unteransprüche. Ein Ausführungsbeispiel der Erfindung wird nachfolgend anhand der Zeichnungen 1 bis 3 näher erläutert.

Die Figuren 4 bis 6 beziehen sich auf Konstruktionen, die nicht zur Erfindung gehören.

Es zeigt:
- Fig. 1: einen Teilbereich einer Zigaretten-Verpackungsmaschine in schematischer Seitenansicht,
- Fig. 2: einen Bereich der Verpackungsmaschine gemäß Fig. 1 im Querschnitt, bei vergrößertem Maßstab,
- Fig. 3: ein Reinigungsaggregat auf der Grundlage von Blasluft im Grundriss,
- Fig. 4: ein nicht der Erfindung zugehörigen mechanisches Reinigungsorgan in Seitenansicht,
- Fig. 5: die Einzelheit gemäß Fig. 4 in Draufsicht gemäß Pfeil V,
- Fig. 6: ein weiteres nicht der Erfindung zugehörigen mechanisches Reinigungsorgan in Seitenansicht.

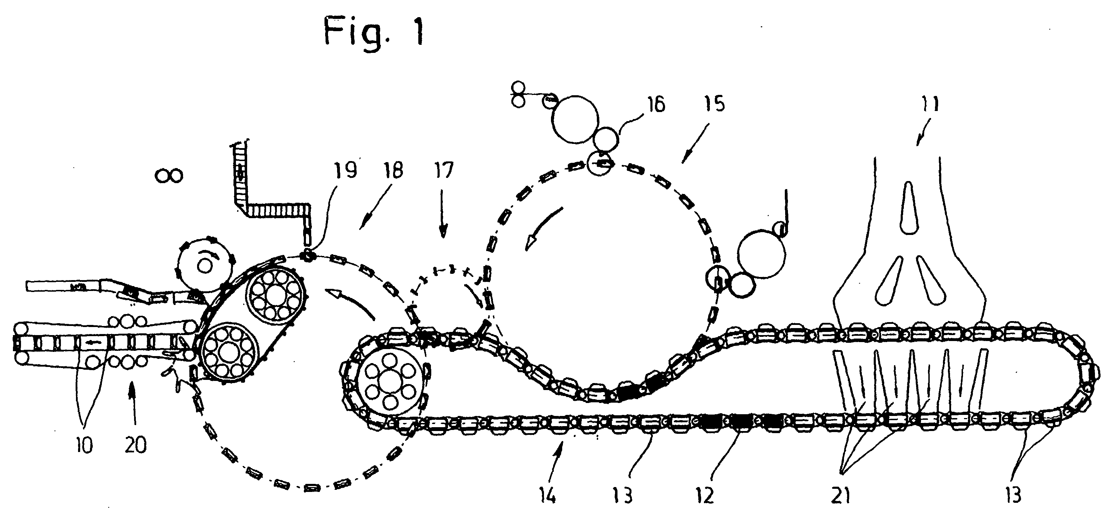

Die in den Zeichnungen dargestellten Konstruktionen beziehen sich auf eine Verpackungsmaschine für Zigaretten, und zwar konkret für die Herstellung von Zigarettenpackungen 10 des Typs Weichbecher. In Fig. 1 ist die Verpackungsmaschine in ihrer Gesamtheit vereinfacht dargestellt. Im einzelnen ist diese Verpackungsmaschine bzw. sind Einheiten derselben dargestellt und beschrieben in US 4 750 607 und der nachveröffentlichten DE 196 44 079.3.

Bei der Verpackungsmaschine gemäß Fig. 1 werden einem Zigarettenmagazin 11 Zigarettengruppen 12 entnommen und an Taschen 13 einer Taschenkette 14 übergeben. Die Zigarettengruppen 12 werden durch die Taschenkette 14 einem Faltrevolver 15 zugeführt. Im Bereich desselben werden die Zigarettenpackungen 10 weitgehend gefertigt, nämlich durch Falten eines Innenzuschnitts aus Stanniol oder Papier und einer becherförmigen Außenumhüllung 16 aus Papier oder dergleichen.

Die soweit fertiggestellten Zigarettenpackungen 10 werden von dem Faltrevolver 15 über einen Zwischenrevolver 17 einem Trockenrevolver 18 zugeführt. Im Bereich desselben wird die Zigarettenpackung 10 mit einer Banderole 19 versehen. Die soweit ergänzte Zigarettenpackung 10 wird einem Abförderer 20 übergeben. Dieser fördert die Zigarettenpackungen 10 einer weiteren Bearbeitung zu, nämlich insbesondere einem Folienpacker zum Anbringen einer äußeren Folienumhüllung.

Bei einer längeren Betriebsunterbrechung wird die Verpackungsmaschine üblicherweise leergefahren. Die Zufuhr von Zigarettengruppen 12 zur Taschenkette 14 wird unterbrochen. Die noch aufgenommenen Zigarettengruppen 12 werden durch alle Stationen der Verpackungsmaschine hindurchtransportiert, bis sie als fertige Zigarettenpackung 10 aus der Verpackungsmaschine austreten.

Nach Abschluß des Leerfahrens - oder ggf. auch bereits während des Betriebes der Verpackungsmaschine - werden an ausgewählten Bereichen und Aggregaten Reinigungsmaßnahmen durchgeführt.

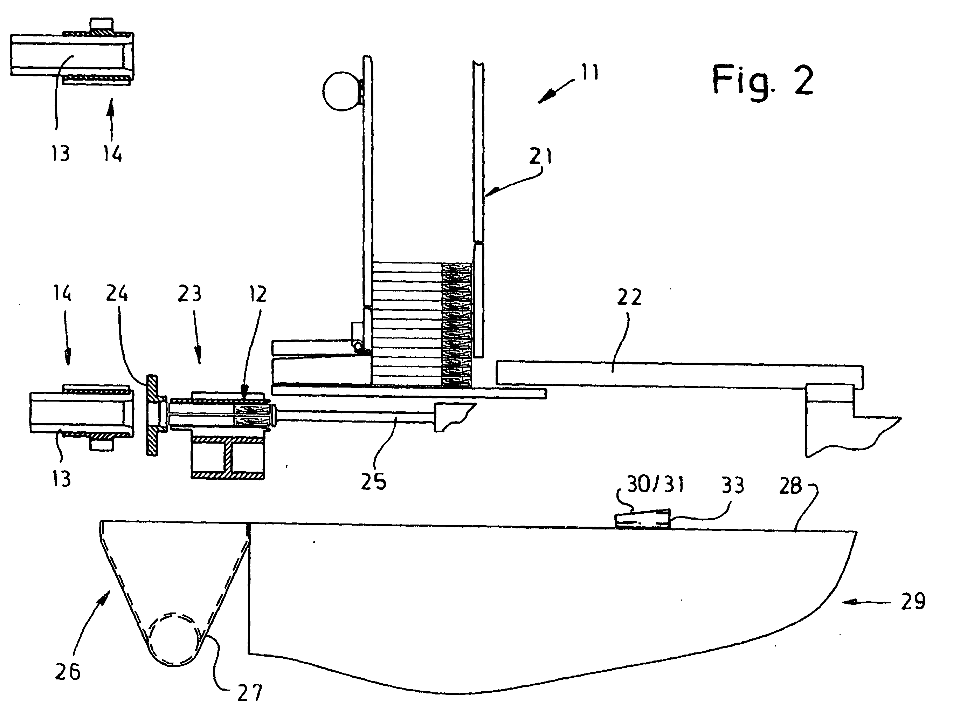

Ein wichtiger Bereich für die Beseitigung von Ablagerungen ist das Zigarettenmagazin 11. Dieses besteht aus mehreren Schachtgruppen 21 und diese jeweils aus mehreren Schächten, in denen die Zigaretten in Reihen übereinander positioniert sind (Fig. 2). Weitere Einzelheiten des Zigarettenmagazins 11 ergeben sich aus US 4 750 607.

Die Zigarettengruppen 12 werden jeweils unten aus einer Schachtgruppe 21 ausgeschoben, und zwar durch horizontal hinund herbewegbare Schieber 22. An der Austrittsseite jeder Schachtgruppe 21 ist eine auf- und abbewegbare Preßtasche 23 angeordnet. Eine Zigarettengruppe 12 wird in die Preßtasche 23 eingeschoben. Diese drückt die Zigarettengruppe 12 leicht zusammen, so daß sie über ein Mundstück 24 in eine Tasche 13 der Taschenkette 14 eingeschoben werden kann. Die Preßtasche 23 ist zu diesem Zweck auf- und abbewegbar. In einer oberen Stellung (nicht gezeigt) wird die Zigarettengruppe 12 aus dem Zigarettenmagazin 11 bzw. aus der Schachtgruppe 21 aufgenommen, und zwar durch den Schieber 22. Danach wird die Preßtasche 23 abgesenkt auf das Niveau der Taschenkette 14, nämlich eines unteren Fördertrums dieser Taschenkette 14. Ein unterhalb der Schachtgruppe 21 hin- und herbewegbarer Stößel 25 schiebt die Zigarettengruppe 12 aus der Preßtasche 23 aus, durch das Mundstück 24 hindurch und in eine Tasche 13.

Im Bereich des Zigarettenmagazins 11, insbesondere im Bereich der Preßtasche 23 und im Bereich der Übergabe der Zigarettengruppen 12 an die Taschenkette 14 ist ein beträchtlicher Anfall an Staub und vor allem an Tabakresten unvermeidbar. Aus diesem Grunde ist in diesem Bereich eine ständig laufende Staub- bzw. Partikelbeseitigung vorgesehen.

Bei dem vorliegenden Ausführungsbeispiel ist im Bereich des maximalen Staub- und Partikelanfalls eine Auffang- und Absaugeinrichtung vorgesehen. Unterhalb der Preßtasche 23 bzw. der Taschenkette 14 ist ein trichterförmiger Auffangbehälter 26 angeordnet, in den die in diesem kritischen Bereich anfallenden Partikel durch Eigengewicht fallen. Zusätzlich wird hier ein Absaugeffekt erzeugt, und zwar durch ein Saugrohr 27. Dieses ist hier im unteren Bereich des Auffangbehälters 26 angeordnet, in Längsrichtung desselben verlaufend. Das Saugrohr 27 ist an eine Unterdruckquelle angeschlossen und führt zu einem zentralen Abfallbehälter.

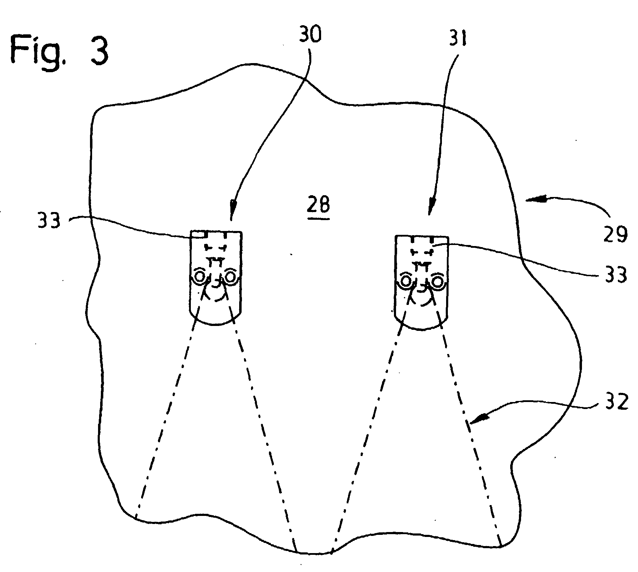

Eine weitere Maßnahme besteht darin, Staub, Tabak und andere Partikel durch Blasluft zu beseitigen, und zwar insbesondere von horizontalen oder annähernd horizontalen Flächen. Wie aus der Fig. 2 ersichtlich, ist unterhalb des Zigarettenmagazins 11 eine horizontale Fläche 28 gebildet. Dabei handelt es sich um die Oberfläche eines Teils eines Maschinengehäuses 29. Tabak und Staub sinken auf die Fläche 28 und werden von dieser durch Abblasen beseitigt. Zu diesem Zweck ist auf der Fläche 28 mindestens ein Blasorgan angeordnet, nämlich eine Blasdüse 30, 31. Je nach Größe der Fläche 28 sind mehrere im Abstand voneinander angeordnete Blasdüsen 30, 31 vorgesehen (Fig. 3).

Die Blasdüsen 30, 31 sind so ausgebildet, daß sie einen flachen, in horizontaler Ebene aufgefächerten Blasstrahl 32 erzeugen. Die Blasdüsen 30, 31 sind zu diesem Zweck vorzugsweise als Schlitzdüsen ausgebildet mit einer schlitzförmigen Düsenöffnung von etwa 1 mm Höhe. Den Blasdüsen 30, 31 wird Blasluft über eine nicht näher gezeigte Luftleitung zugeführt, die über einen Anschluß 33 mit der Blasdüse 30, 31 verbunden ist, und zwar auf der zur Schlitzdüse gegenüberliegenden Seite. Die flache Schlitzdüse ist unmittelbar über der zu reinigenden Fläche 28 angeordnet. Die Strömungscharakteristika des Blasstrahls 32 sind so gewählt, daß eine laminare Strömung gegeben ist.

Wie aus der Fig. 2 ersichtlich, ist der Auffangbehälter 26 unmittelbar neben dem Gehäuse 29 bzw. neben der Fläche 28 positioniert, derart, daß die abgeblasenen Partikel in den Auffangbehälter 26 gelangen und in der beschriebenen Weise abgeführt werden.

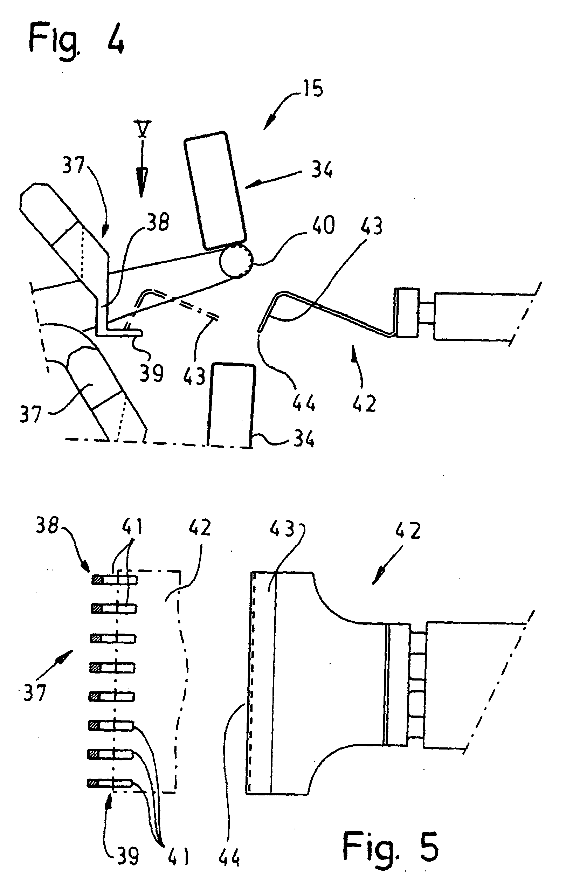

Fig. 4 und 5 zeigen ein Beispiel für die mechanische Beseitigung von Verunreinigungen. Als Beispiel ist ein Teilbereich des Faltrevolvers 15 gezeigt. Dieser ist längs des Umfangs mit in Abständen voneinander angeordneten Aufnahmen für Verpackungsmaterial und Packungsinhalt versehen, nämlich mit Faltdornen 34. Es handelt sich dabei um langgestreckte, im Querschnitt rechteckige Hohlkörper mit dünnen Wandungen. Auf deren Außenseite werden Zuschnitte zur Bildung der Zigarettenpackung 10 gefaltet, insbesondere auch die Außenumhüllungen 16. In tangentialer Ebene und rückseitig über die Faltdorne 34 hinwegragende Faltlappen, nämlich ein Innenlappen 35 und ein Außenlappen 36, werden gegen eine rückwärtige Seitenfläche des Faltdorns 34 gefaltet, derart, daß der Außenlappen 36 den Innenlappen 35 teilweise überdeckt. Die beiden Faltlappen, nämlich Innenlappen 35 und Außenlappen 36, werden dabei durch Klebung miteinander verbunden. Leim wird zu diesem Zweck auf die radial nach außen gerichtete Seite des Innenlappens 35 vor dem Falten aufgebracht.

Die Verarbeitung von Leim im Bereich schnellaufender Aggregate führt notwendigerweise zu Ablagerungen von Leim auf Organen. Fig. 4 zeigt einen kleinen Ausschnitt des Faltrevolvers 15 im Bereich aufeinanderfolgender Faltdorne 34. Die Lappen 35 und 36 werden durch Faltorgane gefaltet. Für den an der radialen Innenseite liegenden Außenlappen 36 ist ein winkelförmiges, schwenkbares Faltorgan 37 vorgesehen. Der Faltbereich besteht aus zwei im rechten Winkel zueinander angeordneten Faltschenkeln 38, 39. Diese erfassen den Faltlappen, nämlich Außenlappen 36 und drücken ihn gegen die Rückseite des Faltdorns 34. Im Anschluß an den Faltvorgang wird die Faltstellung der Lappen 35, 36 durch einen Andrückhebel 40 fixiert.

Das Faltorgan 37 bzw. dessen Faltschenkel 38, 39 sind wegen überschneidender Bewegungen mit anderen Organen kammartig ausgebildet, bestehen nämlich aus einer Mehrzahl von winkelförmigen Stegen 41. Mehrere im Abstand voneinander angeordnete, übereinstimmend ausgebildete, nämlich winkelförmige Stege 41 bilden das Faltorgan 37 bzw. dessen Faltschenkel 38, 39.

Aufgrund der Funktion des Faltorgans 37 sind Ablagerungen von Leimresten an dem Faltorgan 37, nämlich an den Faltschenkeln 38, 39, unvermeidbar. Die Leimrückstände werden durch ein Reinigungsorgan beseitigt, nämlich durch einen Leimschaber 42. Dieser befindet sich in einer dem Faltrevolver 15 zugeordneten Reinigungsstation. Die Reinigung der Faltorgane 37 wird während einer Phase des taktweisen Antriebs des Faltrevolvers 15 durchgeführt. Ein taktweiser Antrieb des Faltrevolvers 15 kann aus anderen Gründen im Zusammenhang mit dem Leerfahren der Verpackungsmaschine erforderlich sein. Näheres hierzu ergibt sich aus DE 196 52 210.2. Während des Stillstands des Faltrevolvers 15 tritt das Reinigungsorgan, nämlich der Leimschaber 42, in den Bereich zwischen aufeinanderfolgenden Faltdornen 34 ein und bearbeitet bzw. reinigt das sich in einer zurückgezogenen Stellung befindende Faltorgan 37. Dieses ist aber dabei so angeordnet, daß ein Faltschenkel 39 im wesentlichen horizontal und der andere Faltschenkel 38 quer, also vertikal gerichtet ist. Der Reinigungsvorgang wird durch annähernd radial gerichtete Reinigungsbewegung des Leimschabers 42 vollzogen, nämlich in Richtung zum Faltorgan 37 und zurück in die Ausgangsstellung gemäß Fig. 4 (ausgezogene Linien). Bei diesem Reinigungstakt gleitet ein schräg abgewinkelter Schaberschenkel 43 auf den zugekehrten Flächen der Faltschenkel 38 und 39 entlang. Eine Kante 44 bewirkt dabei die Reinigung vor allem des horizontalen Faltschenkels 39, der beim Faltvorgang an den beleimten Bereichen der Zuschnitte anliegt.

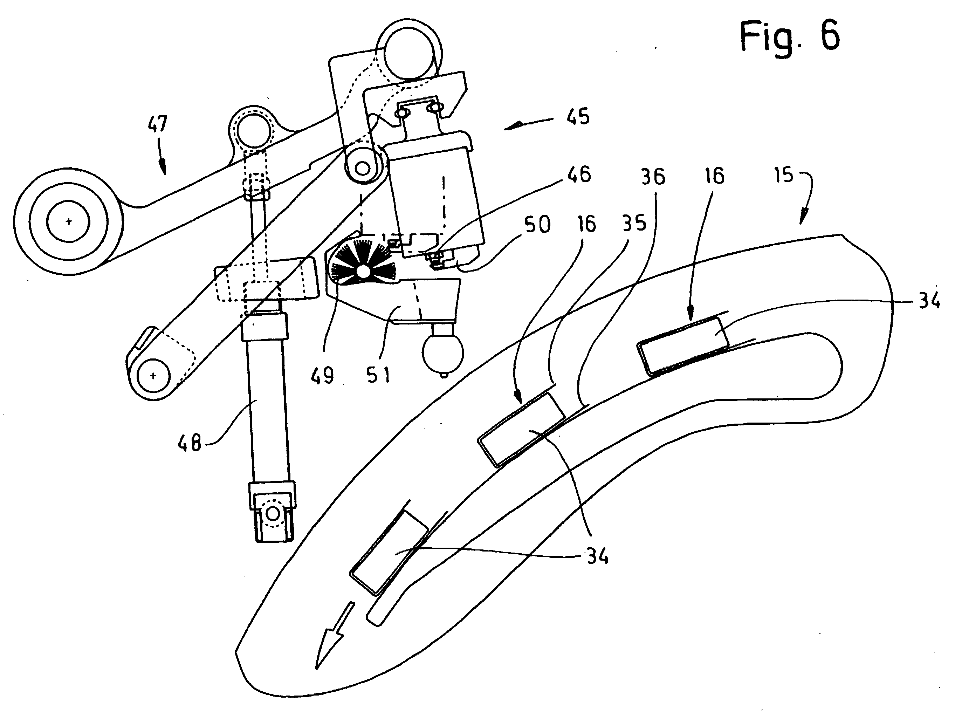

Ein Beispiel für eine mechanische Reinigungsbearbeitung ist auch in Fig. 6 gezeigt. Es geht um die Reinigung eines dem Faltrevolver 15 zugeordneten Aggregats, konkret eines Leimaggregats 45. Dieses Leimaggregat 45 dient zum Auftragen von Leim auf den Zuschnitt der Außenumhüllung 16, und zwar auf den beschriebenen Innenlappen 35.

Das Leimaggregat 45 ist in einer Leimstation ortsfest außerhalb des Drehbereichs des Faltrevolvers 15 positioniert. Zum Aufbringen von Leim auf die Zuschnitte wird das Leimaggregat 45 in eine Arbeitsstellung bewegt. In dieser sind am Leimaggregat 45 angeordnete Leimdüsen 46 unmittelbar benachbart zum Zuschnitt bzw. zum Innenlappen 35 angeordnet, so daß in Abstimmung mit der Bewegung des Faltrevolvers 15 Leim auf den Innenlappen 35 aufgebracht werden kann.

Das Leimaggregat 45 ist an einer Stellmechanik 47 angebracht, die von einem Druckmittelzylinder 48 betätigt wird. Weitere Einzelheiten über Aufbau und Arbeitsweise des Leimaggregats 45 ergeben sich aus der nachveröffentlichten DE 196 48 445.6.

In einer zurückgezogenen, vom Faltrevolver 15 entfernten Position, nämlich einer Wartestellung gemäß Fig. 6, wird das Leimaggregat 45 einer Reinigung unterzogen. Zu diesem Zweck ist ortsfest in der Wartestellung ein Reinigungswerkzeug vorgesehen, das im Bereich der Leimdüsen 46 wirksam wird. Es handelt sich dabei um eine Bürste 49, und zwar um eine zylindrische, drehend angetriebene Bürste 49. Diese ist so positioniert, daß sich die ggf. mehreren Leimdüsen 46 in einer Reinigungsstellung (strichpunktiert in Fig. 6) am Umfang der Bürste 49 befinden. Durch Bewegung, nämlich Rotation der Bürste 49, werden die Leimdüsen 46 und etwaige Verschlußorgane 50 im Bereich der Leimdüsen 46 gereinigt.

Die Bürste 49 ist im Bereich eines Auffangbehälters 51 angeordnet. Die von dem Leimaggregat 45 bzw. den Leimdüsen 46 abgenommenen Verunreinigungen bzw. Leimreste gelangen in den wannenartigen Auffangbehälter 51. Dieser dient zugleich als Auffangbehälter für probeweise vom Leimaggregat 45 abgegebene Leimportionen in der Wartestellung, nämlich insbesondere vor Rückführung in die Arbeitsstellung.

Mechanische und pneumatische Reinigungsmaßnahmen können miteinander gekoppelt werden.

Teile der Verpackungsmaschine, insbesondere flächige Bereiche, wie Gehäuse 29, Abdeckungen etc., sind mit im einzelnen nicht gezeigten, handelsüblichen Vibrationsgeneratoren versehen, die während des Betriebs der Verpackungsmaschine oder während einer Stillstandsphase Schwingungen der Gehäuse 29, Abdeckungen etc. erzeugen, derart, daß vor allem von leicht geneigten Flächen Partikel entfernt werden.

### Bezugszeichenliste:

- 10: Zigarettenpackung
- 11: Zigarettenmagazin
- 12: Zigarettengruppe
- 13: Tasche
- 14: Taschenkette
- 15: Faltrevolver
- 16: Außenumhüllung
- 17: Zwischenrevolver
- 18: Trockenrevolver
- 19: Banderole
- 20: Abförderer
- 21: Schachtgruppe
- 22: Schieber
- 23: Preßtasche
- 24: Mundstück
- 25: Stößel
- 26: Auffangbehälter
- 27: Saugrohr
- 28: Fläche
- 29: Gehäuse
- 30: Blasdüse
- 31: Blasdüse
- 32: Blasstrahl
- 33: Anschluß
- 34: Faltdorn
- 35: Innenlappen
- 36: Außenlappen
- 37: Faltorgan
- 38: Faltschenkel
- 39: Faltschenkel
- 40: Andrückhebel
- 41: Steg
- 42: Leimschaber
- 43: Schaberschenkel
- 44: Kante
- 45: Leimaggregat
- 46: Leimdüse
- 47: Stellmechanik
- 48: Druckmittelzylinder
- 49: Bürste
- 50: Verschlußorgan
- 51: Auffangbehälter

## Patentansprüche

1. Verpackungsmaschine für die Herstellung von Zigarettenpackungen (10) mit einer Zigarettengruppe (12) als Packungsinhalt, wobei die Zigarettengruppen (10) im Bereich eines Zigarettenmagazins (11) durch Ausschieben von Zigaretten aus Schächten von Schachtgruppen (21) des Zigarettenmagazins (11) gebildet werden und einer Taschenkette (14) als Förderer für die Zigarettengruppen (12) zuführbar sind, **gekennzeichnet durch** folgende Merkmale:
a) unterhalb des Zigarettenmagazins (11) ist eine horizontale Fläche (28) als Oberfläche eines Teils eines Maschinengehäuses (29) gebildet zum Auffangen von Tabak und Staub **durch** Absinken von dem Zigarettenmagazin (11),
b) auf der Fläche (28) sind mindestens eine Blasdüse, vorzugsweise mehrere Blasdüsen (30, 31) im Abstand voneinander, angeordnet zur Erzeugung von horizontaler Luftströmung auf der Fläche (28),
c) die Luftströmung der Blasdüse, bzw. der Blasdüsen (30, 31), ist auf einen Auffangbehälter (26) gerichtet,
d) der Auffangbehälter (26) ist unmittelbar neben dem Gehäuse (29) bzw. neben der Fläche (28) positioniert, derart, dass die abgeblasenen Partikel auf den Auffangbehälter (26) gelangen,
e) an den Auffangbehälter (26) ist ein Saugrohr (27) angeschlossen zum Absaugen der Partikel aus dem Auffangbehälter.

2. Verpackungsmaschine nach Anspruch 1, **dadurch gekennzeichnet, dass** der Auffangbehälter (26) nach unten trichterförmig verjüngt und das Saugrohr (27) im unteren Bereich des Auffangbehälters (26) angeordnet ist.

3. Verpackungsmaschine nach Anspruch 1 oder 2, **dadurch gekennzeichnet, dass** der Auffangbehälter (26) unterhalb einer Presstasche (23) angeordnet ist, die im Bereich zwischen Zigarettenmagazin (11) und Taschenkette (14) zur Formierung der Zigarettengruppe (12) angeordnet ist.

## Claims

1. Packaging machine for producing cigarette packs (10) with a cigarette group (12) as pack contents, it being the case that the cigarette groups (10) are formed in the region of a cigarette magazine (11) by virtue of cigarettes being pushed out of shafts of shaft groups (21) of the cigarette magazine (11), and they can be fed to a pocket chain (14) as conveyor for the cigarette groups (12), **characterized by** the following features:
a) formed beneath the cigarette magazine (11) is a horizontal surface (28), as top surface of part of a machine housing (29), for the purpose of collecting tobacco and dust descending from the cigarette magazine (11),
b) arranged on the surface (28) is at least one blowing nozzle, preferably a plurality of blowing nozzles (30, 31) spaced apart from one another, for the purpose of producing a horizontal air flow on the surface (28),
c) the air flow from the blowing nozzle, or from the blowing nozzles (30, 31), is directed onto a collecting container (26),
d) the collecting container (26) is positioned directly alongside the housing (29) or alongside the surface (28), such that the blown-off particles reach the collecting container (26),
e) the collecting container (26) is adjoined by a suction tube (27) for extracting the particles by suction from the collecting container.

2. Packaging machine according to Claim 1, **characterized in that** the collecting container (26) tapers downwards in the form of a funnel and the suction tube (27) is arranged in the bottom region of the collecting container (26).

3. Packaging machine according to Claim 1 or 2, **characterized in that** the collecting container (26) is arranged beneath a pressing pocket (23), which is arranged in the region between the cigarette magazine (11) and pocket chain (14) for the purpose of forming the cigarette group (12).

## Revendications

1. Empaqueteuse pour la confection de paquets de cigarettes (10) avec un groupe de cigarettes (12) comme contenu du paquet, les groupes de cigarettes (10) étant formés dans la zone d'un magasin à cigarettes (11), par expulsion de cigarettes de puits, de groupes de puits (21) du magasin à cigarettes (11) et pouvant être amenés à une chaîne à poches (14) servant de transporteur des groupes de cigarettes (12), **caractérisée par** les caractéristiques suivantes :
a) au-dessous du magasin à cigarettes (11) est formée une surface horizontale (28) constituant la surface supérieure d'une partie d'un carter de machine (29) et destinée à recevoir du tabac et de la poussière par abaissement du magasin à cigarettes (11),
b) sur la surface (28) sont placées au moins une buse de soufflage et de préférence plusieurs buses de soufflage (30, 31) espacées pour la production d'un courant d'air horizontal sur la surface (28),
c) le courant d'air de la buse ou des buses de soufflage (30, 31) est dirigé sur un récipient récepteur (26),
d) le récipient récepteur (26) est placé immédiatement à côté du carter (29) ou à côté de la surface (28) de façon telle que les particules soufflées arrivent sur le récipient récepteur (26),
e) au récipient récepteur (26) est connecté un tuyau d'aspiration (27) pour l'aspiration des particules du récipient récepteur.

2. Empaqueteuse selon la revendication 1, **caractérisée par le fait que** le récipient récepteur (28) se rétrécit en forme d'entonnoir vers le bas et le tuyau d'aspiration (27) est placé dans la partie inférieure du récipient récepteur (26).

3. Empaqueteuse selon l'une des revendications 1 et 2, **caractérisée par le fait que** le récipient récepteur (26) est placé au-dessous d'une poche de pressage (23) qui est placée dans la zone située entre le magasin à cigarettes (11) et la chaîne à poches (14) pour former le groupe de cigarettes (12).
